(19) Europäisches Patentamt / European Patent Office / Office européen des brevets

(11) **EP 3 800 451 B1**

(12) **EUROPEAN PATENT SPECIFICATION**

(45) Date of publication and mention
of the grant of the patent:
**20.11.2024 Bulletin 2024/47**

(21) Application number: **19840565.6**

(22) Date of filing: **17.07.2019**

(51) International Patent Classification (IPC):
*H04N 23/11* (2023.01)     *H04N 23/45* (2023.01)
*H04N 23/63* (2023.01)     *H04N 17/00* (2006.01)
*H04N 5/262* (2006.01)     *G06T 7/80* (2017.01)
*G06V 10/24* (2022.01)

(52) Cooperative Patent Classification (CPC):
**H04N 5/2628; G01J 5/00; G01J 5/12; G06T 7/80;
G06V 10/24; H04N 17/002; H04N 23/23;
H04N 23/45; H04N 23/63;** G06T 2207/10048

(86) International application number:
**PCT/CN2019/096261**

(87) International publication number:
**WO 2020/020021 (30.01.2020 Gazette 2020/05)**

(54) **TEMPERATURE MEASUREMENT PROCESSING METHOD AND APPARATUS, AND THERMAL IMAGING DEVICE**

VERFAHREN UND VORRICHTUNG ZUR TEMPERATURMESSUNGSVERARBEITUNG UND WÄRMEBILDVORRICHTUNG

PROCÉDÉ ET APPAREIL DE TRAITEMENT DE MESURE DE TEMPÉRATURE, ET DISPOSITIF D'IMAGERIE THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2018 CN 201810848253**

(43) Date of publication of application:
**07.04.2021 Bulletin 2021/14**

(73) Proprietor: **Hangzhou Hikmicro Sensing
Technology Co., Ltd.
Hangzhou Zhejiang 311501 (CN)**

(72) Inventor: **LING, Zhenping
Hangzhou, Zhejiang 311501 (CN)**

(74) Representative: **Goddar, Heinz J.
Boehmert & Boehmert
Anwaltspartnerschaft mbB
Pettenkoferstrasse 22
80336 München (DE)**

(56) References cited:
**EP-B1- 1 831 657          CN-A- 102 982 518
CN-A- 104 359 560          CN-A- 107 179 494
CN-A- 107 764 402          CN-A- 107 764 402
CN-A- 107 976 257          JP-A- 2015 194 367
US-A1- 2015 109 454          US-A1- 2016 196 653**

**Description**

**TECHNICAL FIELD**

The present application relates to the technical field of temperature measurement, and in particular, to a temperature measurement processing method and apparatus, and a thermal imaging device.

**BACKGROUND**

In an image device having a visible light imaging channel and a thermal imaging channel, temperature measurement configuration and temperature display function can be implemented through the thermal imaging channel.

Since resolution, such as 384 × 288 (384 × 288 represents image pixels of an infrared thermal imaging imager in which 384 pixels are included in the transverse direction and 288 pixels are included in the vertical direction) or 640 × 512, of a thermal imaging image is relatively low, when the thermal imaging image includes objects whose shapes and temperatures do not differ significantly from each other, the human eye cannot distinguish between the objects from the thermal imaging image. The thermal imaging image lacks details, and thus objects whose shapes and temperatures do not differ significantly from each other cannot be distinguished in the pseudo-color mode-based thermal imaging image. For example, the thermal imaging image includes a switch and a transformer, and since the shapes of the switch and the transformer in the thermal imaging image do not differ significantly from each other and the temperatures of the switch and the transformer in the thermal imaging image do not differ significantly from each other, which is the switch and which is the transformer cannot be distinguished from the thermal imaging image.

CN 107 764 402 A discloses a visible light temperature measurement method based on infrared target detection. The method mainly includes the steps of depicting a virtual thermal radiation image of a measured scene by using the infrared remote sensing technology, and then capturing the same scene to form a color image by using the visible light remote sensing technology; performing a series of processing such as filtering, edge outline trimming, stretching, scaling and cropping to make the imaging of each thing in the scene in the infrared image and the visible light image perfectly overlap proportionally; selecting a measured target object of interest in the visible light image by using a cursor and extracting coordinates of the measured object; and then calculating, through the infrared and visible light image coordinate conversion formula, coordinates of the measured object in the infrared image, finally calculating the temperature of a measuring point by using a Planck radiation formula and performing superimposition onto the visible light image. In this way, the temperature measurement can be performed on any measured object of interest on the visible light image in a very simple and direct manner.

US 2015/109454 A1 discloses a method for enabling improved analysis and interpretation of associated image data in an infrared (IR) image and a visible light (VL) image depicting a real world scene, captured using a thermography arrangement comprising an IR imaging system and a VL imaging system, the method comprising: capturing an IR image depicting the scene, having a first field of view (FOV); capturing a VL image depicting the scene, having a second FOV; processing at least one of the VL image and the IR image such that the FOV represented in the VL image substantially corresponds to the FOV represented in the IR image; associating the resulting IR and VL images to provide associated images; and enabling a user to access the associated images for display, wherein analysis and interpretation of the associated images, having image pair content, is intuitive as the resulting VL image and the resulting IR image after associating represent the same FOV

US 2016/196653 A1 discloses various techniques for a system and method to dynamically co-register images captured by two or more separate imaging modules. For example, in one embodiment, a method includes: capturing a thermal image of an object; capturing a visible light (VL) image of the object; determining a plurality of thermal image reference points from the thermal image; determining a plurality of VL image reference points from the VL image; determining a geometric transform based on the plurality of thermal image reference points and the plurality of VL image reference points; and applying the geometric transform to the thermal image or the VL image to align the thermal image and the VL image. In another embodiment, an imaging system comprises two or more separate imaging modules and one or more processors configured to perform the method above to dynamically co-register images.

CN 107 976257 A and EP 1 831 657 A2 disclose techniques for co-registering an IR image and a VL image using calibration data including offsets corresponding to different observation distances.

**SUMMARY**

The invention is defined by a temperature measurement processing method and a thermal imaging device according to the independent claims. Preferred embodiments are defined in the dependent claims.

**BRIEF DESCRIPTION OF THE DRAWINGS**

FIG. 1 is a schematic flowchart of a temperature measurement processing method according to an exemplary embodiment.

FIG. 2 is a structural block diagram of a temperature measurement processing apparatus according to an exemplary embodiment.

FIG. 3 is a schematic flowchart of a mapping process according to an exemplary embodiment.

FIG. 4 is a schematic diagram of a relationship between a visible light horizontal viewing angle and a thermal imaging horizontal viewing angle according to an exemplary embodiment.

FIG. 5 is a schematic flowchart of a temperature measurement processing method according to another exemplary embodiment.

FIG. 6 is a structural block diagram of a temperature measurement processing apparatus according to another exemplary embodiment.

FIG. 7 is a structural block diagram of a thermal imaging device according to an exemplary embodiment.

**DETAILED DESCRIPTION OF THE EMBODIMENTS**

Exemplary embodiments will be described in detail herein, examples of which are shown in the accompanying drawings. The following description relates to the drawings, unless otherwise indicated, the same numerals in the different drawings represent the same or similar elements. The embodiments described in the following exemplary embodiments do not represent all embodiments consistent with the present disclosure. Rather, they are merely examples of apparatuses and methods consistent with some aspects of the present disclosure as detailed in the appended claims.

Terms used in the present disclosure are for the purpose of describing particular embodiments only and are not intended to limit the present disclosure. The singular form "a/an", "said", and "the" used in the present disclosure and the attached claims are also intended to include the plural form, unless other meanings are clearly represented in the context. It should also be understood that the term "and/or" used herein refers to and includes any or all possible combinations of one or more associated listed terms.

It should be understood that although the present disclosure may use the terms such as first, second, and third to describe various information, the information should not be limited to these terms. These terms are only used to distinguish the same type of information from one another. For example, in the case of not departing from the scope of the present disclosure, first information may also be referred to as second information; similarly, the second information may also be referred to as the first information. Depending on the context, for example, the word "if" used herein may be interpreted as "upon" or "when" or "in response to determining".

In embodiments of the present application, the execution subject of the temperature measurement processing method can include an image device, and values of some parameters used are preset, and can be stored in the image device, for example, stored in a non-volatile memory of the image device, and can be invoked during use. How to determine the values of these parameters in embodiments of the present application is described below, but is not limited thereto. It can be understood that determining the values of these parameters is also required to make inventive efforts.

A preconfigured offset can be determined by the following steps:

mapping, with a specified coordinate mapping relationship, a visible light image segment in a visible light image which represents the training object and is scaled according to a specified scaling ratio into a thermal imaging image, so as to determine an initial mapping position of the visible light image segment in the thermal imaging image; then, adjusting the initial mapping position of the visible light image segment in the thermal imaging image, such that a position of the visible light image segment mapped into the thermal imaging image and a position of a thermal imaging image segment representing the training object in the thermal imaging image are coincided; and determining the adjustment amount of the initial mapping position as the preconfigured offset.

A fine-tuned offset can be determined by the following steps:

mapping, with a specified coordinate mapping relationship, a visible light image segment in a visible light image which represents the training object and is scaled according to a specified scaling ratio into a thermal imaging image, so as to determine an initial mapping position of the visible light image segment in the thermal imaging image; next, adjusting the initial mapping position of the visible light image segment in the thermal imaging image according to the preconfigured offset to obtain an intermediate mapping position of the visible light image segment in the thermal imaging image; then, fine-tuning the intermediate mapping position in the thermal imaging image, such that a position of the visible light image segment mapped into the thermal imaging image and a position of a thermal imaging image segment in the thermal imaging image representing the training object are coincided; and determining the adjustment amount of the intermediate mapping position as the fine-tuned offset.

A specified scaling ratio is determined by the following steps:
scaling a visible light image according to a size of a visible light image segment representing the training object in the visible light image and a size of a thermal imaging image segment representing the training object in the thermal imaging image, such that the size of the visible light image segment in the scaled visible light image is the same as the size of the thermal imaging image segment in the thermal imaging image, and determining a ratio of the scaling as the specified scaling ratio.

The preconfigured offset and the specified scaling ratio are configured together at the time of factory departure, and the configuration process of the preconfigured offset and the specified scaling ratio are specifically described below.

First, a training object is placed at a position of a particular distance in front of the image device, where the particular distance may be an optimal observation distance;

Next, images are respectively captured through the visible light channel and the thermal imaging image channel of the image device to obtain a visible light image and a thermal imaging image, where the visible light image and the thermal imaging image both include the training object;

Next, the visible light image is scaled according to a size of a visible light image segment representing the training object in the visible light image and a size of a thermal imaging image segment representing the training object in the thermal imaging image, such that the size of the visible light image segment in the scaled visible light image is the same as the size of the thermal imaging image segment in the thermal imaging image. The same size represents the same number of pixels. The corresponding scaling ratio is determined as the above specified scaling ratio. The determination of the specified scaling ratio can be completed by using one or more frames of visible light images and corresponding thermal imaging images captured in real time;

Next, the visible light image segment representing the training object in the scaled visible light image is mapped into the thermal imaging image with a specified coordinate mapping relationship and the initial mapping position of the visible light image segment in the thermal imaging image is determined. The specified coordinate mapping relationship is also preconfigured, and is a predicted coordinate mapping relationship from the scaled visible light image to the thermal imaging image. There may be a position deviation between the visible light image segment mapped into the thermal imaging image and the thermal imaging image segment;

Next, the initial mapping position is adjusted, such that a position of the visible light image segment in the thermal imaging image and a position of the thermal imaging image segment representing the training object in the thermal imaging image are coincided; and the adjustment amount of the initial mapping position is determined as the preconfigured offset. It can be understood that the determination of the preconfigured offset can be completed by using one or more frames of visible light images and corresponding thermal imaging images captured in real time.

When determining the specified scaling ratio, an image region of the visible light image segment representing the training object in the visible light image and an image region of the thermal imaging image segment representing the training object in the thermal imaging image may also be obtained (the obtained image region may be determined by selecting several feature points in the image segment representing the training object and connecting the several feature points). The scaling ratio of the visible light image can be determined according to the number of pixels in the two image regions, such that after the visible light image is scaled, the numbers of pixels in the two image regions are identical. That is, after the visible light image is scaled, the number of pixels included in the visible light image segment and the thermal imaging image segment are the same.

The visible light image segment in the scaled visible light image and the thermal imaging image segment representing the training object in the thermal imaging image include the same number of pixels. The visible light image segment in the scaled visible light image is mapped into the thermal imaging image to obtain an initial mapping position. The preconfigured offset is determined by adjusting the initial mapping position in the horizontal and vertical directions such that the visible light image segment in the scaled visible light image coincides with the thermal imaging image segment representing the training object in the thermal imaging image.

The training object is placed at the position of the particular distance in front of the image device, where the particular distance may be an optimal observation distance. The optimal observation distance may be a common observation distance of the image device, and a pre-configured offset and a specified scaling ratio at the common observation distance are used, without determining a corresponding offset and a corresponding scaling ratio at each position, thereby saving operation time and improving efficiency.

It can be understood that the images captured during the configuration process of the preconfigured offset and scaling ratio and the images captured during the temperature measurement process are images captured at different moments.

In the case of different object distances, the initial mapping position of the visible light image segment in the thermal imaging image may not coincide with the thermal imaging image segment in the thermal imaging image, and thus, on the basis of the preconfigured offset, fine tuning needs to be performed according to the fine-tuned offset.

The fine-tuned offset may be determined at a position at which the image device performs temperature measurement processing on the target object, and at this case, the preconfigured offset and the specified scaling ratio are preset, and the training process of the fine-tuned offset is described in detail below:

First, a visible light image and a corresponding thermal imaging image of a training object are captured with the image device, and both of the visible light image and the thermal imaging image include image segments obtained by imaging the training object thereon respectively. The image segments are also referred to as a visible light image segment and a thermal imaging image segment. A positional relationship (object distance) between the image device and the training object can continue to be used when the image device performs temperature measurement processing, and the training object can be replaced with other objects;

Next, the visible light image is scaled according to a scaling ratio, and the visible light image segment representing the training object in the scaled visible light image is mapped into the thermal imaging image with a specified coordinate mapping relationship, so as to determine an initial mapping position of the visible light image segment in the thermal imaging image;

Next, the initial mapping position is adjusted according to a preconfigured offset to obtain an intermediate mapping position of the visible light image segment in the thermal imaging image, and at this time, the coarse tuning of the initial mapping position is completed, but the intermediate mapping position still needs to be fine-tuned;

Next, the intermediate mapping position is adjusted in the horizontal and vertical directions, so that the visible light image segment in the thermal imaging image coincides with the thermal imaging image segment representing the training object in the thermal imaging image, and the adjustment amount of the intermediate mapping position is determined as the fine-tuned offset.

In different object distance scenes, the fine-tuned offset is used to solve the problem that accurate registration cannot be implemented with the specified coordinate mapping relationship and the preconfigured offset at the current object distance. Since the data of the fine-tuned offset is stored, in the subsequent temperature measurement processing of the same object distance scene, the fine-tuned offset is invoked without repeating the step of determining the fine-tuned offset, and the fine-tuned offset at the current object distance can be directly used.

It can be understood that the images captured during the training process of the fine-tuned offset, the images captured during the temperature measurement process or the images captured during the configuration process of the preconfigured offset and the scaling ratio are images captured at different moments.

The preconfigured offset and the fine-tuned offset are respectively stored in the image device. When performing the temperature measurement processing subsequently, the preconfigured offset and the corresponding fine-tuned offset are respectively invoked, where the fine-tuned offset and the object distance have a one-to-one correspondence relationship. Alternatively, the preconfigured offset and the corresponding fine-tuned offset can be superimposed to obtain a total offset, and then the total offset is stored in the image device. Then the total offset is directly invoked subsequently, where the total offset and the object distance have a one-to-one correspondence relationship.

The offset may include a horizontal offset and/or a vertical offset of the image segment. The superposition or summation of the preconfigured offset and the fine-tuned offset is directional, which is vector summation. For example, the horizontal direction has positive and negative directions, and the vertical direction also has positive and negative directions.

Hereinafter, the temperature measurement processing method according to embodiments of the present application is described in more detail, but should not be limited thereto.

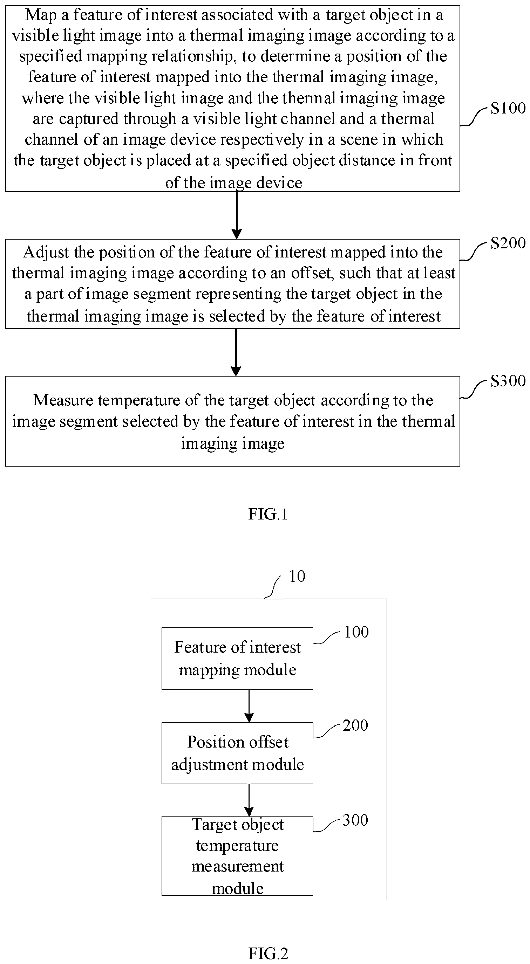

In an embodiment, referring to FIG. 1, the temperature measurement processing method includes steps S100-S300.

At step S100, a feature of interest associated with a target object in a visible light image are mapped into a thermal imaging image according to a specified mapping relationship, to determine a position of the feature of interest mapped into the thermal imaging image, where the visible light image and the thermal imaging image are captured through a visible light channel and a thermal channel of an image device respectively in a scene in which the target object is placed at a specified object distance in front of the image device.

At step S200, the position of the feature of interest mapped into the thermal imaging image is adjusted according to an offset, such that at least a part of image segment representing the target object in the thermal imaging image is selected by the feature of interest.

At step S300, temperature of the target object is measured according to the image segment selected by the feature of interest in the thermal imaging image.

The temperature measurement processing method according to embodiments of the present application is applied to the image device, and the image device includes a visible light channel and a thermal imaging channel. Image capturing can be performed on a same target object for the visible light channel and the thermal imaging channel to correspondingly obtain the visible light image and the thermal imaging image.

Specifically, the image device may be a thermal imaging device, which includes an uncooled infrared focal plane detector, a visible light sensor, a first lens group, a second lens group, at least one processor, and a non-volatile memory. The first lens group is assembled to the uncooled infrared focal plane detector. The second lens group is assembled to the visible light sensor. The uncooled infrared focal plane detector is configured to capture a thermal imaging image. The visible light sensor is configured to capture a visible light image. The non-volatile memory stores a mapping relationship table of a mapping relationship from the visible light image to the thermal imaging image and a program invokable by the processor, and when the processor executes the program, steps S100 to S300 are implemented. Since the uncooled infrared focal plane detector and the visible light sensor are very close in physical position, the visible light image captured by the visible light channel and the thermal imaging image captured by the thermal imaging channel generally include a same target object.

At step S100, the visible light image and the thermal imaging image captured by the image device through the visible light channel and the thermal imaging channel include the same target object, and there may be a case that the display of the target object in the visible light image is more clear and complete, and the display of the target object in the thermal imaging image is blurry and incomplete. The visible light image and the thermal imaging image may be captured at the same time or at different moments. It should be noted that, when the visible light image and the thermal imaging image are captured, the position distance between the target object and the image device remains unchanged, that is, the object distance is unchanged.

The feature of interest associated with the target object in the visible light image is mapped into the thermal imaging image with the specified mapping relationship, where the specified mapping relationship includes a coordinate conversion relationship (hereinafter referred to as a coordinate mapping relationship) between an imaging coordinate system of the visible light image and an imaging coordinate system of the thermal imaging image and a scaling ratio. The manner of determining the coordinate mapping relationship is not limited. The manner of determining the scaling ratio may refer to the description of the above training process.

Since the resolution of the visible light image is higher than the resolution of the thermal imaging image, selecting the target object in the visible light image is much easier and less likely to select the wrong object. Since the thermal imaging image lacks details, it is difficult to distinguish the target object in the thermal imaging image, and when the target object is selected from the thermal imaging image for temperature measurement, other objects similar in appearance to the target object may be mistakenly selected. The feature of interest associated with the target object in the visible light image is directly configured in the visible light channel, instead of being directly configured in the thermal imaging channel, to prevent the wrong object from being selected.

The shape of the feature of interest in the image may be box-like, for example, when the target object is a switch object, an image segment representing the switch object in the visible light image can be selected by the feature of interest, and the selected box-like shape does not need to be strictly consistent with the shape of the switch, as long as the selected box-like shape can explicitly indicates that the image segment representing the switch object is selected. Alternatively, the feature of interest may be dot-like (point-like), etc. There is no limitation, as long as the image segment representing the target object in the thermal imaging image can be selected by the feature of interest. The feature of interest is configured in the visible light image acquired by the visible light channel, but the temperature measurement is still completed in the thermal imaging channel.

The feature of interest may be a marker indicating that the image segment representing the target object in the visible light image is selected. The selection may be performed by manual recognition or image recognition. The marker can be presented in the visible light image and after the feature of interest is selected, the position of the feature of interest in the visible light image is determined. The feature of interest is mapped into the thermal imaging image according to the specified mapping relationship. Likewise, the mapped feature of interest can be presented in the thermal imaging image, to enable a machine to identify and locate the corresponding position of the mapped feature of interest.

At step S200, the offset is invoked from the image device, which indicates a positional offset between the feature of interest mapped into the thermal imaging image and the image segment representing the target object in the thermal imaging image. Therefore, after the feature of interest in the visible light image is mapped into the thermal imaging image, a mapping position of the mapped feature of interest in the thermal imaging image is adjusted according to the offset, such that the mapping position of the feature of interest is adjusted to the position of the image segment representing the target object in the thermal imaging image. The offset can refer to the total offset described above.

At step S300, since the image segment representing the target object in the thermal imaging image is selected by the feature of interest mapped into the thermal imaging image, the temperature of the target object is measured. The temperature measurement methods can be existing temperature measurement methods in the thermal imaging channel, which is not described herein again.

According to the specified mapping relationship, the feature of interest associated with the target object in the visible light image is mapped into the thermal imaging image, to determine a position of the feature of interest mapped into the thermal imaging image. The position of the feature of interest mapped into the thermal imaging image is adjusted according to the offset, such that at least a part of image segment representing the target object in the thermal imaging image is selected by the feature of interest. Thus, the temperature of the target object can be measured without directly selecting an image segment representing the target object from the thermal imaging image, and since the resolution of the visible light image is higher, selecting the visible light image segment representing the target object in the visible image is easier and more accurate, thereby solving the problem of performing temperature measurement on an object having a similar shape due to blurring of the image segment representing the target object in the thermal imaging image.

In an embodiment, the above method process can be performed by a temperature measurement processing apparatus 10. As shown in FIG. 2, the temperature measurement processing apparatus 10 include three modules: a feature of interest mapping module 100, a position offset adjustment module 200, and a target object temperature measurement module 300. The feature of interest mapping module 100 is configured to perform the above step S100, the position offset adjustment module 200 is configured to perform the above step S200, and the target object temperature measurement module 300 is configured to perform the above step S300.

In an embodiment, the specified mapping relationship includes at least a coordinate mapping relationship from the visible light image to the thermal imaging image and a scaling ratio.

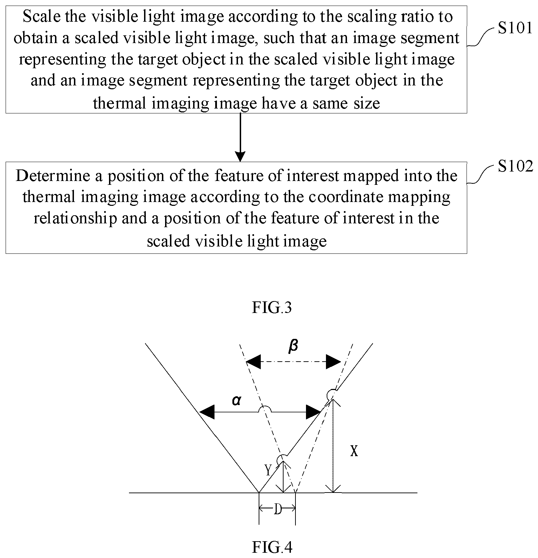

As shown in FIG. 3, at step S100, mapping the feature of interest associated with the target object in the visible light image into the thermal imaging image according to the specified mapping relationship including the following steps S101 to S102.

At step S101, the visible light image is scaled according to the scaling ratio to obtain a scaled visible light image, such that an image segment representing the target object in the scaled visible light image and an image segment representing the target object in the thermal imaging image have a same size.

At step S102, a position of the feature of interest mapped into the thermal imaging image is determined according to the coordinate mapping relationship and a position of the feature of interest in the scaled visible light image.

At step S101, the scaling ratio refers to a zoom level with which the image segment representing the target object in the visible light image is resized to the same size as the image segment representing the target object in the thermal imaging image. The visible light image is scaled according to the scaling ratio, that is, the image segment and the feature of interest representing the target object in the visible light image are scaled, such that the image segment representing the target object in the scaled visible light image has the same size as the image segment representing the target object in the thermal imaging image.

For example, the scaling ratio indicates that the visible light image needs to be zoomed out by a factor of m, which indicates the image segment and the feature of interest representing the target object are zoomed out by the factor of m. Of course, the scaling ratio and the object distance also have a one-to-one correspondence relationship. In the temperature measurement process, once the object distance is determined, the scaling ratio corresponding to the object distance may be determined according to the object distance. For details, reference may be made to the foregoing content regarding the scaling ratio, and details are not described herein again.

At step S102, after the visible light image is scaled, the position of the feature of interest mapped into the thermal imaging image is determined according to the coordinate mapping relationship and the position of the feature of interest in the scaled visible light image. The scaled feature of interest is mapped into the thermal imaging image, so as to ensure that the size of the image segment selected by the feature of interest mapped into the thermal imaging image is consistent with the size of the image segment representing the target object in the thermal imaging image, and avoid the case in which image segments representing other objects in the thermal imaging are selected by the feature of interest, or the image segment representing the target object in the thermal imaging image is not all selected by the feature of interest.

After completing the mapping at step S102, the position of the feature of interest mapped into the thermal imaging image in the thermal imaging image is adjusted according to the offset. For example, if the offset indicates that the feature of interest is horizontally moved to the right by n pixel points, the feature of interest mapped into the thermal imaging image is horizontally moved to the right by n pixel points.

The offset includes a preconfigured offset, or a sum of the preconfigured offset and a fine-tuned offset.

The preconfigured offset can be configured at the time of factory departure, assuming that the preconfigured offset is acquired in the scene of the first object distance, during the temperature measurement process, if the current object distance is equal to the first object distance, the preconfigured offset is directly used to adjust the position of the visible light image segment mapped into the thermal imaging image.

However, in a scene in which the current object distance is different from the first object distance, that is, the current object distance and the first object distance are not equal, the sum of the preconfigured offset and the fine-tuned offset are used to adjust the position offset of the feature of interest. The fine-tuned offset indicates an offset that needs to be fine-tuned after the feature of interest mapped into the thermal imaging image at the current object distance is adjusted according to the preconfigured offset, such that the image segment representing the target object in the thermal imaging image is selected by the feature of interest mapped into the thermal imaging image.

For details, reference may be made to the foregoing content regarding the preconfigured offset, the fine-tuned offset, and the offset, which is not described herein again.

Referring to FIG. 4, the optical axes of the visible light channel and the thermal imaging channel are not completely coincided. The uncooled infrared focal plane detector and the visible light sensor have a distance D over a horizontal or vertical distance. Herein, taking a horizontal distance as an example, the horizontal distance D causes "vacuum regions" to appear between the optical axis of the visible light channel and the thermal imaging channel and on the right side of the optical axis of the thermal imaging channel. That is, through the two channels, the distances cannot be observed, such as distance X and distance Y as shown in FIG. 4:

$$Y=D*\sin(90°-\beta/2)*\sin(90°-\alpha/2)/\sin(\alpha/2+\beta/2);$$

$$X=D*\tan(90°-\beta/2)*\tan(90°-\alpha/2)/(\tan((90°-\beta/2)-\tan((90°-\alpha/2));$$

where $\alpha$ represents a horizontal viewing angle for the visible light channel and $\beta$ represents a horizontal viewing angle for the thermal imaging channel.

To enable the visible light viewing angle to cover the thermal imaging viewing angle, while a target sensed by the visible light sensor remains as many pixels as possible, in an embodiment, the viewing angle of the visible light channel is greater than the viewing angle of the thermal imaging channel. During the temperature measurement process, when the visible light image and the thermal imaging image are captured, the viewing angle for the visible light channel is adjusted to be greater than the viewing angle for the thermal imaging channel.

The reason why the viewing angle for the visible light channel is adjusted to be greater than the viewing angle for the thermal imaging channel is as follows: according to the description shown in FIG. 4, the optical axis of the visible light channel and the optical axis of the thermal imaging channel are separated by a distance; and if the viewing angles (where the vertical viewing angle and the horizontal viewing angle are associated) of the two are set to be equal, the horizontal viewing angles for the two channels are separated with each other due to the same size, thereby causing that the "vacuum regions" are large, which is disadvantageous for the observation of the target object. Thus, the viewing angle for the visible light channel is adjusted to be greater than the viewing angle for the thermal imaging channel.

Since the resolution of the visible light image is 1080P (1920 × 1080 resolution in progressive scan), the resolution of the thermal imaging image is 384 × 288 or 640 × 512, and the horizontal viewing angles and the vertical viewing angles of the two are different, the vertical viewing angle for the visible light channel is adjusted to be greater than the thermal imaging viewing angle. The lens group used by the visible light channel can generally be used to adjust the viewing angle, and thus the visible light viewing angle can be adjusted to be greater than the thermal imaging viewing angle, so as to ensure that the visible light image includes a thermal imaging image segment representing the same target object acquired by the thermal imaging channel.

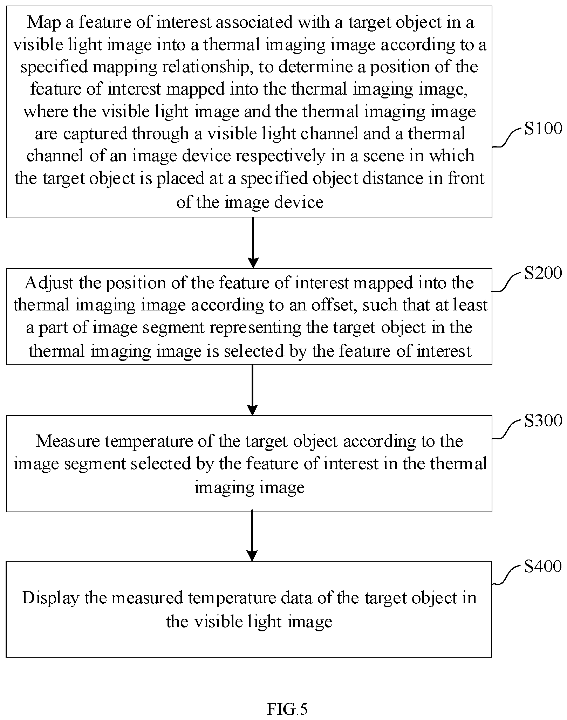

In an embodiment, referring to FIG. 5, the temperature measurement processing method further includes step S400.

At step S400, the measured temperature data of the target object is displayed in the visible light image.

Step S400 may be performed after step S300. After the feature of interest in the thermal imaging image selects the image segment representing the target object from the thermal imaging image, the temperature of the target object is measured to obtain corresponding temperature data, and the temperature data is displayed in the visible light image. In this way, displaying the temperature data in the visible light image is implemented. In another embodiment, the measured temperature data of the target object and the feature of interest associated with the target object can be both displayed in the visible light image, such that the temperature data and the image segment representing the target object selected by the feature of interest are presented in the visible light image in correspondence with each other, thereby implementing temperature display and facilitating user observation.

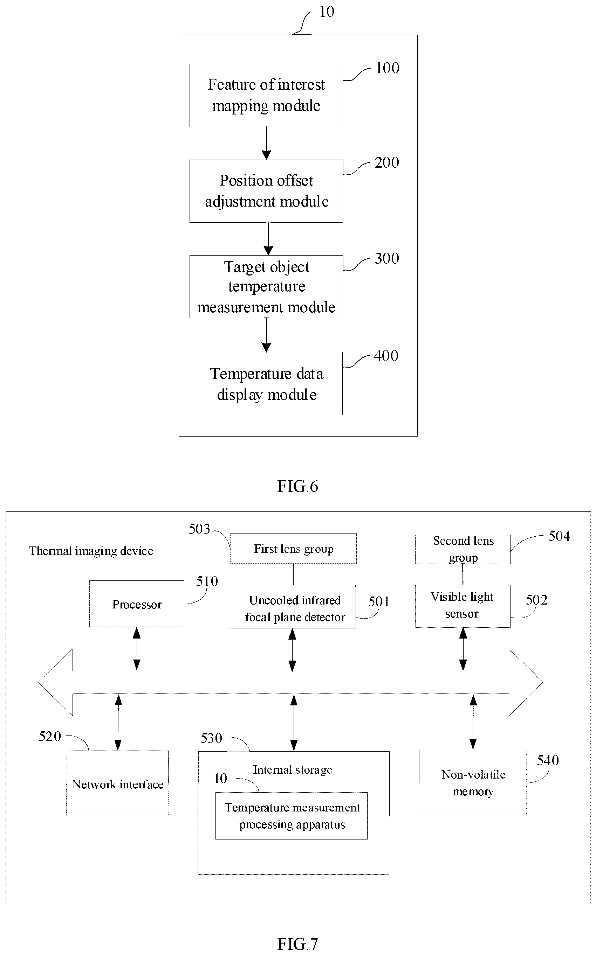

In an embodiment, referring to FIG. 6, the temperature measurement processing apparatus further include a temperature data display module 400. The above step S400 can be implemented by the temperature data display module 400.

The temperature measurement processing apparatus according to embodiments of the present application is described below, but should not be limited thereto.

In an embodiment, referring to FIG. 2, a temperature measurement processing apparatus 10 is applied to an image device and includes:

a feature of interest mapping module 100, configured to map, according to a specified mapping relationship, a feature of interest associated with a target object in a visible light image into a thermal imaging image, to determine a position of the feature of interest mapped into the thermal imaging image, wherein the visible light image and the thermal imaging image are respectively acquired through a visible light channel and a thermal imaging channel of the image device in a scene in which the target object is placed at a specified distance in front of the image device;

a position offset adjustment module 200, configured to adjust, according to an offset, the position of the feature of interest mapped into the thermal imaging image, such that at least a part of image segment representing the target object in the thermal imaging image is selected by the feature of interest;

a target object temperature measurement module 300, configured to measure temperature of the target object according to the image segment selected by the feature of interest in the thermal imaging image.

In an embodiment, the specified mapping relationship includes at least a coordinate mapping relationship and a scaling ratio.

The feature of interest mapping module 100 includes:

a ratio scaling unit, configured to scale the visible light image according to the scaling ratio to obtain a scaled visible light image, such that an image segment representing the target object in the scaled visible light image and an image segment representing the target object in the thermal imaging image have a same size;

a coordinate mapping unit, configured to determine the position of the feature of interest mapped into the thermal imaging image according to the coordinate mapping relationship and a position of the feature of interest in the scaled visible light image.

In an embodiment, the offset includes: a preconfigured offset; or a sum of the preconfigured offset and a fine-tuned offset trained.

In an embodiment, a viewing angle for the visible light channel is greater than a viewing angle for the thermal imaging channel.

In an embodiment, referring to FIG. 6, the apparatus 10 further includes: the temperature data display module 400 configured to displaying the measured temperature data of the target object in the visible light image.

For the implementation process of the functions and effects of the units in the apparatus, reference may be made to the implementation process of the corresponding steps in the above methods, and details are not described herein again.

For the apparatus embodiments, since the apparatus embodiments substantially correspond to the method embodiment, reference may be made to some of the description of the method embodiments. The apparatus embodiments described above are merely schematic, in which the units described as separate components may or may not be physically separated, and the components displayed as units may or may not be physical units.

The present application further provides a thermal imaging device. Referring to FIG. 7, the thermal imaging device includes an uncooled infrared focal plane detector 501, a visible light sensor 502, a first lens group 503, a second lens group 504, at least one processor 510, and a non-volatile memory 540. The first lens group 503 is assembled to the uncooled infrared focal plane detector 501 and the second lens group 504 is assembled to the visible light sensor 502.

The uncooled infrared focal plane detector 501 is configured to capture a thermal imaging image and the visible light sensor 502 is configured to capture a visible light image.

The non-volatile memory 540 stores a mapping relationship table of a mapping relationship from the visible light image to the thermal imaging image and a program invokable by the processor.

When executing the program, the processor 510 is caused to perform operations including:

reading the mapping relationship in the mapping relationship table in the non-volatile memory 540;

mapping a feature of interest associated with a target object in the visible light image into a thermal imaging image according to a specified mapping relationship, to determine a position of the feature of interest mapped into the thermal imaging image;

adjusting the position of the feature of interest mapped into the thermal imaging image according to an offset, such that at least a part of image segment representing the target object in the thermal imaging image is selected by the feature of interest; and

measuring temperature of the target object according to the image segment selected by the feature of interest in the thermal imaging image.

The temperature measurement processing apparatus according to the embodiments of the present application can be applied to a thermal imaging device. Taking software as an example, as an apparatus in a logical sense, the apparatus is formed by reading a corresponding computer program instruction in the non-volatile memory into an internal storage by a processor of the thermal imaging device. From the hardware level, in addition to the processor 510, the internal storage 530, the interface 520, and the non-volatile memory 540 shown in FIG. 7, in embodiments, the thermal imaging device where the apparatus 10 is located can further include other hardware according to the actual function of the electronic device, which will not be described herein again.

The present application further provides a machine-readable storage medium storing a program. When the program is executed by a processor, the temperature measurement processing method according to any of the above embodiments is implemented.

The present application may take the form of a computer program product embodied in one or more storage media including program code therein. The storage media include, but not limited to, a disk memory, a CD-ROM (Compact Disc Read-Only Memory), an optical memory, etc. Machine-readable storage media include permanent and non-permanent, removable and non-removable media. Information storage can be implemented by any method or technology. The information may be computer readable instructions, data structures, modules of programs, or other data. Examples of machine-readable storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, Compact Disc Read-Only Memory (CD-ROM), digital versatile disc (DVD) or other optical storage, magnetic cassette, a magnetic tape disk storage or other magnetic storage device or any other non-transmission medium which can be used to store information that can be accessed by the computer device.

The above description is merely exemplary embodiments of the present application, and is not intended to limit the present application.

**Claims**

1. A temperature measurement processing method applied to an image device, comprising:

mapping (S100), according to a specified mapping relationship, a feature of interest associated with a target object in a first visible light image into a first thermal imaging image, to determine a position of the feature of interest mapped into the first thermal imaging image, wherein the first visible light image and the first thermal imaging image are respectively acquired through a visible light channel and a thermal imaging channel of the image device in a scene in which the target object is placed at a specified distance in front of the image device; the method being in that:

the specified mapping relationship comprises a coordinate mapping relationship between an imaging coordinate system of the visible light image and an imaging coordinate system of the thermal imaging image, and a specified scaling ratio corresponding to a common observation distance of the image device;
invoking, from a memory of the image device, a preconfigured offset corresponding to the common observation distance;
invoking, from a memory of the image device, a fine-tuned offset corresponding to the specified distance when the specified distance is different from the common observation distance;
adjusting (S200), according to an offset, the position of the feature of interest mapped into the first thermal imaging image to a position of an image segment representing the target object in the first thermal imaging image, and selecting at least a part of the image segment representing the target object as a feature of interest in the first thermal imaging image, wherein when the specified distance is different from the common observation distance, the offset comprises the sum of the preconfigured offset corresponding to the common observation distance and of the fine-tuned offset trained corresponding to the specified distance, and when the specified distance is equal to the common observation distance, the offset comprises the preconfigured offset corresponding to the common observation distance;
measuring (S300) the temperature of the target object according to the selected feature of interest in the first thermal imaging image;
wherein the fine-tuned offset is determined in a training process comprising:

respectively acquiring a second visible light image and a second thermal imaging image through the visible light channel and the thermal imaging channel of the image device in a scene in which a training object is placed at the specified distance in front of the image device;
scaling, according to the specified scaling ratio, the second visible light image, to obtain a second scaled visible light image;
determining an initial mapping position of a visible light image segment in the second thermal imaging image according to the coordinate mapping relationship and a position of the visible light image segment in the second scaled visible light image, wherein the visible light image segment represents an image segment representing the training object in the second visible light image;
adjusting the initial mapping position of the visible light image segment in the second thermal imaging image according to the preconfigured offset corresponding to the common observation distance to an intermediate mapping position;
adjusting the intermediate mapping position, such that the visible light image segment mapped into the second thermal imaging image coincides with a thermal imaging image segment in the second thermal imaging image segment, wherein the thermal imaging image segment represents an image segment representing the training object in the second thermal imaging image; and
determining an adjustment amount of the intermediate mapping position as the fine-tuned offset corresponding to the specified distance.

2. The temperature measurement processing method according to claim 1, wherein mapping, according to the specified mapping relationship, the feature of interest associated with the target object in the first visible light image into the first thermal imaging image comprises:

scaling the first visible light image according to the specified scaling ratio to obtain a first scaled visible light image; and
determining the position of the feature of interest mapped into the first thermal imaging image according to the coordinate mapping relationship and a position of the feature of interest in the first scaled visible light image.

3. The temperature measurement processing method according to claim 1, wherein a viewing angle for the visible light channel is greater than a viewing angle for the thermal imaging channel.

4. The temperature measurement processing method according to claim 1, further comprising:
displaying the measured temperature data of the target object in the first visible light image.

5. The temperature measurement processing method according to claim 1, further comprising:
determining the specified scaling ratio in a configuration process comprising:

respectively acquiring a third visible light image and a third thermal imaging image through the visible light channel and the thermal imaging channel of the image device in a scene in which a training object is placed at the common observation distance in front of the image device;
scaling, according to a size of a visible light image segment representing the training object in the third visible light image and a size of a thermal imaging image segment representing the training object in the third thermal imaging image, the third visible light image, to obtain a third scaled visible light image, such that the visible light image segment in the third scaled visible light image and the thermal imaging image segment in the third thermal imaging image have a same size; and
determining a ratio of the scaling as the specified scaling ratio.

6. A thermal imaging device, comprising an uncooled infrared focal plane detector (501), a visible light sensor (502), a first lens group (503), a second lens group (504), at least one processor (510), a memory;

wherein the first lens group (503) is assembled to the uncooled infrared focal plane detector (501) and the second lens group (504) is assembled to the visible light sensor (502);
the uncooled infrared focal plane detector (501) is configured to capture a thermal imaging image and the visible light sensor (502) is configured to capture a visible light image;
the memory stores a mapping relationship table of a mapping relationship from the visible light image to the thermal imaging image and a program invokable by the processor (510); and
when executing the program, the processor is caused to perform operations comprising:

reading the mapping relationship in the mapping relationship table in the memory;
mapping, according to a specified mapping relationship, a feature of interest associated with a target object in a first visible light image into a first thermal imaging image, to determine a position of the feature of interest mapped into the first thermal imaging image, wherein the first visible light image and the first thermal imaging image are respectively acquired through a visible light channel and a thermal imaging channel of the image device in a scene in which the target object is placed at a specified distance in front of the image device;
the thermal imaging device being **characterized in that**:

the specified mapping relationship comprises a coordinate mapping relationship between an imaging coordinate system of the visible light image and an imaging coordinate system of the thermal imaging image, and a specified scaling ratio corresponding to a common observation distance of the image device;
invoking, from a memory of the image device, a preconfigured offset corresponding to the common observation distance;

invoking, from a memory of the image device, a fine-tuned offset corresponding to the specified distance when the specified distance is different from the common observation distance;

adjusting, according to an offset, the position of the feature of interest mapped into the first thermal imaging image to a position of an image segment representing the target object in the first thermal imaging image, and selecting at least a part of the image segment representing the target object as a feature of interest in the first thermal imaging image, wherein when the specified distance is different from the common observation distance, the offset comprises the sum of the preconfigured offset corresponding to the common observation distance and of the fine-tuned offset trained corresponding to the specified distance, and when the specified distance is equal to the common observation distance, the offset comprises the preconfigured offset corresponding to the common observation distance;

measuring the temperature of the target object according to the selected feature of interest in the first thermal imaging image;

wherein the fine-tuned offset is determined in a training process comprising:

respectively acquiring a second visible light image and a second thermal imaging image through the visible light channel and the thermal imaging channel of the image device in a scene in which a training object is placed at the specified distance in front of the image device;

scaling, according to the specified scaling ratio, the second visible light image, to obtain a second scaled visible light image;

determining an initial mapping position of a visible light image segment in the second thermal imaging image according to the coordinate mapping relationship and a position of the visible light image segment in the second scaled visible light image, wherein the visible light image segment represents an image segment representing the training object in the second visible light image;

adjusting the initial mapping position of the visible light image segment in the second thermal imaging image according to the preconfigured offset corresponding to the common observation distance to an intermediate mapping position;

adjusting the intermediate mapping position, such that the visible light image segment mapped into the second thermal imaging image coincides with a thermal imaging image segment in the second thermal imaging image segment, wherein the thermal imaging image segment represents an image segment representing the training object in the second thermal imaging image; and

determining an adjustment amount of the intermediate mapping position as the fine-tuned offset corresponding to the specified distance.

**7.** The thermal imaging device according to claim 6, wherein mapping, according to the specified mapping relationship, the feature of interest associated with the target object in the visible light image into the thermal imaging image comprises:

scaling the visible light image according to the specified scaling ratio to obtain a first scaled visible light image; and

determining the position of the feature of interest mapped into the thermal imaging image according to the coordinate mapping relationship and a position of the feature of interest in the scaled visible light image.

**8.** The thermal imaging device according to claim 6, wherein a viewing angle for the visible light channel is greater than a viewing angle for the thermal imaging channel.

**9.** The thermal imaging device according to claim 6, wherein the device is further configured to display the measured temperature data of the target object in the visible light image.

**Patentansprüche**

**1.** Temperaturmessverarbeitungsverfahren, das auf eine Bildvorrichtung angewendet wird, umfassend:

Abbilden (S100), gemäß einer spezifizierten Abbildungsbeziehung, eines Merkmals von Interesse, das einem Zielobjekt in einem ersten Bild mit sichtbarem Licht zugeordnet ist, in ein erstes Wärmeabbildungsbild, um eine Position des Merkmals von Interesse zu bestimmen, das in das erste Wärmeabbildungsbild abgebildet wird, wobei das erste Bild mit sichtbarem Licht und das erste Wärmeabbildungsbild jeweils durch einen Kanal für sichtbares Licht und einen Wärmeabbildungskanal der Bildvorrichtung in einer Szene erfasst werden, in der das Zielobjekt in einem spezifizierten Abstand vor der Bildvorrichtung platziert ist;

wobei das Verfahren **dadurch gekennzeichnet ist, dass**:

die spezifizierte Abbildungsbeziehung eine Koordinatenabbildungsbeziehung zwischen einem Abbildungskoordinatensystem des Bildes mit sichtbarem Licht und einem Abbildungskoordinatensystem des Wärmeabbildungsbildes und ein spezifiziertes Skalierungsverhältnis umfasst, das einem gemeinsamen Beobachtungsabstand der Bildvorrichtung entspricht;

Aufrufen, aus einem Speicher der Bildvorrichtung, eines vorkonfigurierten Versatzes, der dem gemeinsamen Beobachtungsabstand entspricht;

Aufrufen, aus einem Speicher der Bildvorrichtung, eines feinabgestimmten Versatzes, der dem spezifizierten Abstand entspricht, wenn sich der spezifizierte Abstand von dem gemeinsamen Beobachtungsabstand unterscheidet;

Anpassen (S200), gemäß einem Versatz, der Position des Merkmals von Interesse, das in das erste Wärmeabbildungsbild abgebildet wird, an eine Position eines Bildsegments, das das Zielobjekt in dem ersten Wärmeabbildungsbild repräsentiert, und Auswählen mindestens eines Teils des Bildsegments, das das Zielobjekt repräsentiert, als ein Merkmal von Interesse in dem ersten Wärmeabbildungsbild, wobei, wenn sich der spezifizierte Abstand von dem gemeinsamen Beobachtungsabstand unterscheidet, der Versatz die Summe des vorkonfigurierten Versatzes, der dem gemeinsamen Beobachtungsabstand entspricht, und des feinabgestimmten Versatzes umfasst, der entsprechend dem spezifizierten Abstand trainiert wird, und wenn der spezifizierte Abstand gleich dem gemeinsamen Beobachtungsabstand ist, der Versatz den vorkonfigurierten Versatz umfasst, der dem gemeinsamen Beobachtungsabstand entspricht;

Messen (S300) der Temperatur des Zielobjekts gemäß dem ausgewählten Merkmal von Interesse in dem ersten Wärmeabbildungsbild;

wobei der feinabgestimmte Versatz in einem Trainingsprozess bestimmt wird, umfassend:

jeweiliges Erfassen eines zweiten Bildes mit sichtbarem Licht und eines zweiten Wärmeabbildungsbildes durch den Kanal für sichtbares Licht und den Wärmeabbildungskanal der Bildvorrichtung in einer Szene, in der ein Trainingsobjekt in dem spezifizierten Abstand vor der Bildvorrichtung platziert ist;

Skalieren, gemäß dem spezifizierten Skalierungsverhältnis, des zweiten Bildes mit sichtbarem Licht, um ein zweites skaliertes Bild mit sichtbarem Licht zu erhalten;

Bestimmen einer anfänglichen Abbildungsposition eines Bildsegments mit sichtbarem Licht in dem zweiten Wärmeabbildungsbild gemäß der Koordinatenabbildungsbeziehung und einer Position des Bildsegments mit sichtbarem Licht in dem zweiten skalierten Bild mit sichtbarem Licht, wobei das Bildsegment mit sichtbarem Licht ein Bildsegment repräsentiert, das das Trainingsobjekt in dem zweiten Bild mit sichtbarem Licht repräsentiert;

Anpassen der anfänglichen Abbildungsposition des Bildsegments mit sichtbarem Licht in dem zweiten Wärmeabbildungsbild gemäß dem vorkonfigurierten Versatz, der dem gemeinsamen Beobachtungsabstand entspricht, an eine Zwischenabbildungsposition;

Anpassen der Zwischenabbildungsposition, sodass das Bildsegment mit sichtbarem Licht, das in das zweite Wärmeabbildungsbild abgebildet wird, mit einem Wärmeabbildungsbildsegment in dem zweiten Wärmeabbildungsbildsegment zusammenfällt, wobei das Wärmeabbildungsbildsegment ein Bildsegment repräsentiert, das das Trainingsobjekt in dem zweiten Wärmeabbildungsbild repräsentiert; und

Bestimmen eines Anpassungsbetrags der Zwischenabbildungsposition als den feinabgestimmten Versatz, der dem spezifizierten Abstand entspricht.

2. Temperaturmessverarbeitungsverfahren nach Anspruch 1, wobei das Abbilden, gemäß der spezifizierten Abbildungsbeziehung, des Merkmals von Interesse, das dem Zielobjekt in dem ersten Bild mit sichtbarem Licht zugeordnet ist, in das erste Wärmeabbildungsbild umfasst:

Skalieren des ersten Bildes mit sichtbarem Licht gemäß dem spezifizierten Skalierungsverhältnis, um ein erstes skaliertes Bild mit sichtbarem Licht zu erhalten; und

Bestimmen der Position des Merkmals von Interesse, das in das erste Wärmeabbildungsbild abgebildet wird, gemäß der Koordinatenabbildungsbeziehung und einer Position des Merkmals von Interesse in dem ersten skalierten Bild mit sichtbarem Licht.

3. Temperaturmessverarbeitungsverfahren nach Anspruch 1, wobei ein Betrachtungswinkel für den Kanal mit sichtbarem Licht größer als ein Betrachtungswinkel für den Wärmeabbildungskanal ist.

4. Temperaturmessverarbeitungsverfahren nach Anspruch 1, ferner umfassend:

Anzeigen der gemessenen Temperaturdaten des Zielobjekts in dem ersten Bild mit sichtbarem Licht.

5. Temperaturmessverarbeitungsverfahren nach Anspruch 1, ferner umfassend:
Bestimmen des spezifizierten Skalierungsverhältnisses in einem Konfigurationsprozess, umfassend:

jeweiliges Erfassen eines dritten Bildes mit sichtbarem Licht und eines dritten Wärmeabbildungsbildes durch den Kanal für sichtbares Licht und den Wärmeabbildungskanal der Bildvorrichtung in einer Szene, in der ein Trainingsobjekt in dem gemeinsamen Beobachtungsabstand vor der Bildvorrichtung platziert ist;
Skalieren, gemäß einer Größe eines Bildsegments mit sichtbarem Licht, das das Trainingsobjekt in dem dritten Bild mit sichtbarem Licht repräsentiert, und einer Größe eines Wärmeabbildungsbildsegments, das das Trainingsobjekt in dem dritten Wärmeabbildungsbild repräsentiert, des dritten Bildes mit sichtbarem Licht, um ein drittes skaliertes Bild mit sichtbarem Licht zu erhalten, sodass das Bildsegment mit sichtbarem Licht in dem dritten skalierten Bild mit sichtbarem Licht und das Wärmeabbildungsbildsegment in dem dritten Wärmeabbildungsbild eine gleiche Größe aufweisen; und
Bestimmen eines Verhältnisses der Skalierung als das spezifizierte Skalierungsverhältnis.

6. Wärmeabbildungsvorrichtung, umfassend einen ungekühlten Infrarot-Brennebenendetektor (501), einen Sensor (502) für sichtbares Licht, eine erste Linsengruppe (503), eine zweite Linsengruppe (504), mindestens einen Prozessor (510), einen Speicher;

wobei die erste Linsengruppe (503) an dem ungekühlten Infrarot-Brennebenendetektor (501) montiert ist und die zweite Linsengruppe (504) an dem Sensor (502) für sichtbares Licht montiert ist;
der ungekühlte Infrarot-Brennebenendetektor (501) eingerichtet ist, ein Wärmeabbildungsbild aufzunehmen, und der Sensor (502) für sichtbares Licht eingerichtet ist, ein Bild mit sichtbarem Licht aufzunehmen;
der Speicher eine Abbildungsbeziehungstabelle einer Abbildungsbeziehung von dem Bild mit sichtbarem Licht zu dem Wärmeabbildungsbild und ein Programm speichert, das durch den Prozessor (510) aufrufbar ist; und wenn das Programm ausgeführt wird, der Prozessor veranlasst wird, Operationen auszuführen, umfassend:

Lesen der Abbildungsbeziehung in der Abbildungsbeziehungstabelle in dem Speicher;
Abbilden, gemäß einer spezifizierten Abbildungsbeziehung, eines Merkmals von Interesse, das einem Zielobjekt in einem ersten Bild mit sichtbarem Licht zugeordnet ist, in ein erstes Wärmeabbildungsbild, um eine Position des Merkmals von Interesse zu bestimmen, das in das erste Wärmeabbildungsbild abgebildet wird, wobei das erste Bild mit sichtbarem Licht und das erste Wärmeabbildungsbild jeweils durch einen Kanal für sichtbares Licht und einen Wärmeabbildungskanal der Bildvorrichtung in einer Szene erfasst werden, in der das Zielobjekt in einem spezifizierten Abstand vor der Bildvorrichtung platziert ist;

wobei die Wärmeabbildungsvorrichtung **dadurch gekennzeichnet ist, dass**:

die spezifizierte Abbildungsbeziehung eine Koordinatenabbildungsbeziehung zwischen einem Abbildungskoordinatensystem des Bildes mit sichtbarem Licht und einem Abbildungskoordinatensystem des Wärmeabbildungsbildes und ein spezifiziertes Skalierungsverhältnis umfasst, das einem gemeinsamen Beobachtungsabstand der Bildvorrichtung entspricht;
Aufrufen, aus einem Speicher der Bildvorrichtung, eines vorkonfigurierten Versatzes, der dem gemeinsamen Beobachtungsabstand entspricht;
Aufrufen, aus einem Speicher der Bildvorrichtung, eines feinabgestimmten Versatzes, der dem spezifizierten Abstand entspricht, wenn sich der spezifizierte Abstand von dem gemeinsamen Beobachtungsabstand unterscheidet;
Anpassen, gemäß einem Versatz, der Position des Merkmals von Interesse, das in das erste Wärmeabbildungsbild abgebildet wird, an eine Position eines Bildsegments, das das Zielobjekt in dem ersten Wärmeabbildungsbild repräsentiert, und Auswählen mindestens eines Teils des Bildsegments, das das Zielobjekt repräsentiert, als ein Merkmal von Interesse in dem ersten Wärmeabbildungsbild, wobei, wenn sich der spezifizierte Abstand von dem gemeinsamen Beobachtungsabstand unterscheidet, der Versatz die Summe des vorkonfigurierten Versatzes, der dem gemeinsamen Beobachtungsabstand entspricht, und des feinabgestimmten Versatzes umfasst, der entsprechend dem spezifizierten Abstand trainiert wird, und wenn der spezifizierte Abstand gleich dem gemeinsamen Beobachtungsabstand ist, der Versatz den vorkonfigurierten Versatz umfasst, der dem gemeinsamen Beobachtungsabstand entspricht;
Messen der Temperatur des Zielobjekts gemäß dem ausgewählten Merkmal von Interesse in dem ersten Wärmeabbildungsbild;

wobei der feinabgestimmte Versatz in einem Trainingsprozess bestimmt wird, umfassend:

jeweiliges Erfassen eines zweiten Bildes mit sichtbarem Licht und eines zweiten Wärmeabbildungsbildes durch den Kanal für sichtbares Licht und den Wärmeabbildungskanal der Bildvorrichtung in einer Szene, in der ein Trainingsobjekt in dem spezifizierten Abstand vor der Bildvorrichtung platziert ist;

Skalieren, gemäß dem spezifizierten Skalierungsverhältnis, des zweiten Bildes mit sichtbarem Licht, um ein zweites skaliertes Bild mit sichtbarem Licht zu erhalten;

Bestimmen einer anfänglichen Abbildungsposition eines Bildsegments mit sichtbarem Licht in dem zweiten Wärmeabbildungsbild gemäß der Koordinatenabbildungsbeziehung und einer Position des Bildsegments mit sichtbarem Licht in dem zweiten skalierten Bild mit sichtbarem Licht, wobei das Bildsegment mit sichtbarem Licht ein Bildsegment repräsentiert, das das Trainingsobjekt in dem zweiten Bild mit sichtbarem Licht repräsentiert;

Anpassen der anfänglichen Abbildungsposition des Bildsegments mit sichtbarem Licht in dem zweiten Wärmeabbildungsbild gemäß dem vorkonfigurierten Versatz, der dem gemeinsamen Beobachtungsabstand entspricht, an eine Zwischenabbildungsposition;

Anpassen der Zwischenabbildungsposition, sodass das Bildsegment mit sichtbarem Licht, das in das zweite Wärmeabbildungsbild abgebildet wird, mit einem Wärmeabbildungsbildsegment in dem zweiten Wärmeabbildungsbildsegment zusammenfällt, wobei das Wärmeabbildungsbildsegment ein Bildsegment repräsentiert, das das Trainingsobjekt in dem zweiten Wärmeabbildungsbild repräsentiert; und

Bestimmen eines Anpassungsbetrags der Zwischenabbildungsposition als den feinabgestimmten Versatz, der dem spezifizierten Abstand entspricht.

7. Wärmeabbildungsvorrichtung nach Anspruch 6, wobei das Abbilden, gemäß der spezifizierten Abbildungsbeziehung, des Merkmals von Interesse, das dem Zielobjekt in dem Bild mit sichtbarem Licht zugeordnet ist, in das Wärmeabbildungsbild umfasst:

Skalieren des Bildes mit sichtbarem Licht gemäß dem spezifizierten Skalierungsverhältnis, um ein erstes skaliertes Bild mit sichtbarem Licht zu erhalten; und

Bestimmen der Position des Merkmals von Interesse, das in das Wärmeabbildungsbild abgebildet wird, gemäß der Koordinatenabbildungsbeziehung und einer Position des Merkmals von Interesse in dem skalierten Bild mit sichtbarem Licht.

8. Wärmeabbildungsvorrichtung nach Anspruch 6, wobei ein Betrachtungswinkel für den Kanal mit sichtbarem Licht größer als ein Betrachtungswinkel für den Wärmeabbildungskanal ist.

9. Wärmeabbildungsvorrichtung nach Anspruch 6, wobei die Vorrichtung ferner eingerichtet ist, die gemessenen Temperaturdaten des Zielobjekts in dem Bild mit sichtbarem Licht anzuzeigen.


**Revendications**

1. Procédé de traitement de mesure de température appliqué à un dispositif d'image, comprenant :

le mappage (S100), selon une relation de mappage spécifiée, d'une caractéristique particulière associée à un objet cible dans une première image de lumière visible en une première image d'imagerie thermique, pour déterminer une position de la caractéristique particulière mappée dans la première image d'imagerie thermique, dans lequel la première image de lumière visible et la première image d'imagerie thermique sont acquises respectivement par le biais d'un canal de lumière visible et d'un canal d'imagerie thermique du dispositif d'image dans une scène dans laquelle l'objet cible est placé à une distance spécifiée devant le dispositif d'image ;
le procédé étant **caractérisé en ce que** :

la relation de mappage spécifiée comprend une relation de mappage de coordonnées entre un système de coordonnées d'imagerie de l'image de lumière visible et un système de coordonnées d'imagerie de l'image d'imagerie thermique, et un rapport d'échelle spécifié correspondant à une distance d'observation commune du dispositif d'image ;
l'appel, en provenance d'une mémoire du dispositif d'image, d'un décalage préconfiguré correspondant à la distance d'observation commune ;
l'appel, en provenance d'une mémoire du dispositif d'image, d'un décalage réglé finement correspondant à la distance spécifiée lorsque la distance spécifiée est différente de la distance d'observation commune ; l'ajustement (S200), selon un décalage, de la position de la caractéristique particulière mappée dans la première image d'imagerie thermique à une position d'un segment d'image représentant l'objet cible dans la première image d'imagerie thermique, et la sélection d'au moins une partie du segment d'image représentant l'objet cible en tant que caractéristique particulière dans la première image d'imagerie thermique, dans lequel lorsque la distance spécifiée est différente de la distance d'observation commune, le décalage comprend la somme du décalage préconfiguré correspondant à la distance d'observation commune et du décalage réglé finement entraîné correspondant à la distance spécifiée, et lorsque la distance spécifiée est égale à la distance d'observation commune, le décalage comprend le décalage préconfiguré correspondant à la distance d'observation commune ; la mesure (S300) de la température de l'objet cible en fonction de la caractéristique particulière sélectionnée dans la première image d'imagerie thermique ; dans lequel le décalage réglé finement est déterminé dans un processus d'entraînement comprenant :

l'acquisition respectivement d'une seconde image de lumière visible et d'une seconde image d'imagerie thermique par le biais du canal de lumière visible et du canal d'imagerie thermique du dispositif d'image dans une scène dans laquelle un objet d'entraînement est placé à la distance spécifiée devant le dispositif d'image ;

la mise à l'échelle, en fonction du rapport d'échelle spécifié, de la seconde image de lumière visible, pour obtenir une seconde image de lumière visible mise à l'échelle ;

la détermination d'une position de mappage initiale d'un segment d'image de lumière visible dans la seconde image d'imagerie thermique selon la relation de mappage de coordonnées et une position du segment d'image de lumière visible dans la seconde image de lumière visible mise à l'échelle, dans lequel le segment d'image de lumière visible représente un segment d'image représentant l'objet d'entraînement dans la seconde image de lumière visible ;

l'ajustement de la position de mappage initiale du segment d'image de lumière visible dans la seconde image d'imagerie thermique à une position de mappage intermédiaire en fonction du décalage préconfiguré correspondant à la distance d'observation commune ;

l'ajustement de la position de mappage intermédiaire, de sorte que le segment d'image de lumière visible mappé dans la seconde image d'imagerie thermique coïncide avec un segment d'image d'imagerie thermique dans le second segment d'image d'imagerie thermique, dans lequel le segment d'image d'imagerie thermique représente un segment d'image représentant l'objet d'entraînement dans la seconde image d'imagerie thermique ; et

la détermination d'une quantité d'ajustement de la position de mappage intermédiaire comme étant le décalage réglé finement correspondant à la distance spécifiée.

2. Procédé de traitement de mesure de température selon la revendication 1, dans lequel le mappage, selon la relation de mappage spécifiée, de la caractéristique particulière associée à l'objet cible dans la première image de lumière visible dans la première image d'imagerie thermique comprend :

la mise à l'échelle de la première image de lumière visible en fonction du rapport d'échelle spécifié pour obtenir une première image de lumière visible mise à l'échelle ; et

la détermination de la position de la caractéristique particulière mappée dans la première image d'imagerie thermique en fonction de la relation de mappage de coordonnées et d'une position de la caractéristique particulière dans la première image de lumière visible mise à l'échelle.

3. Procédé de traitement de mesure de température selon la revendication 1, dans lequel un angle de vision pour le canal de lumière visible est supérieur à un angle de vision pour le canal d'imagerie thermique.

4. Procédé de traitement de mesure de température selon la revendication 1, comprenant en outre : l'affichage des données de température mesurées de l'objet cible dans la première image de lumière visible.

5. Procédé de traitement de mesure de température selon la revendication 1, comprenant en outre : la détermination du rapport d'échelle spécifié dans un processus de configuration comprenant :

l'acquisition respectivement d'une troisième image de lumière visible et d'une troisième image d'imagerie thermique par le biais du canal de lumière visible et du canal d'imagerie thermique du dispositif d'image dans une scène dans laquelle un objet d'entraînement est placé à la distance d'observation commune devant le dispositif d'image ;

la mise à l'échelle, en fonction d'une taille d'un segment d'image de lumière visible représentant l'objet d'entraînement dans la troisième image de lumière visible et d'une taille d'un segment d'image d'imagerie thermique représentant l'objet d'entraînement dans la troisième image d'imagerie thermique, de la troisième image de lumière visible, pour obtenir une troisième image de lumière visible mise à l'échelle, de sorte que le segment d'image de lumière visible dans la troisième image de lumière visible mise à l'échelle et le segment d'image d'imagerie thermique dans la troisième image d'imagerie thermique ont une même taille ; et

la détermination d'un rapport de la mise à l'échelle comme étant le rapport d'échelle spécifié.

6. Dispositif d'imagerie thermique, comprenant un détecteur de plan focal infrarouge non refroidi (501), un capteur de lumière visible (502), un premier groupe de lentilles (503), un second groupe de lentilles (504), au moins un processeur (510), une mémoire ;

dans lequel le premier groupe de lentilles (503) est assemblé au détecteur de plan focal infrarouge non refroidi (501) et le second groupe de lentilles (504) est assemblé au capteur de lumière visible (502) ;

le détecteur de plan focal infrarouge non refroidi (501) est configuré pour capturer une image d'imagerie thermique et le capteur de lumière visible (502) est configuré pour capturer une image de lumière visible ;

la mémoire stocke une table de relations de mappage d'une relation de mappage de l'image de lumière visible à l'image d'imagerie thermique et un programme pouvant être appelé par le processeur (510) ; et

lors de l'exécution du programme, le processeur est amené à effectuer des opérations comprenant :

la lecture de la relation de mappage dans la table de relations de mappage dans la mémoire ;

le mappage, selon une relation de mappage spécifiée, d'une caractéristique particulière associée à un objet cible dans une première image de lumière visible en une première image d'imagerie thermique, pour déterminer une position de la caractéristique particulière mappée dans la première image d'imagerie thermique, dans lequel la première image de lumière visible et la première image d'imagerie thermique sont acquises respectivement par le biais d'un canal de lumière visible et d'un canal d'imagerie thermique du dispositif d'image dans une scène dans laquelle l'objet cible est placé à une distance spécifiée devant le dispositif d'image ;

le dispositif d'imagerie thermique étant **caractérisé en ce que** :

la relation de mappage spécifiée comprend une relation de mappage de coordonnées entre un système de coordonnées d'imagerie de l'image de lumière visible et un système de coordonnées d'imagerie de l'image d'imagerie thermique, et un rapport d'échelle spécifié correspondant à une distance d'observation commune du dispositif d'image ;

l'appel, en provenance d'une mémoire du dispositif d'image, d'un décalage préconfiguré correspondant à la distance d'observation commune ;

l'appel, en provenance d'une mémoire du dispositif d'image, d'un décalage réglé finement correspondant à la distance spécifiée lorsque la distance spécifiée est différente de la distance d'observation commune ;

l'ajustement, en fonction d'un décalage, de la position de la caractéristique particulière mappée dans la première image d'imagerie thermique à une position d'un segment d'image représentant l'objet cible dans la première image d'imagerie thermique, et la sélection d'au moins une partie du segment d'image représentant l'objet cible en tant que caractéristique particulière dans la première image d'imagerie thermique, dans lequel lorsque la distance spécifiée est différente de la distance d'observation commune, le décalage comprend la somme du décalage préconfiguré correspondant à la distance d'observation commune et du décalage réglé finement entraîné correspondant à la distance spécifiée, et lorsque la distance spécifiée est égale à la distance d'observation commune, le décalage comprend le décalage préconfiguré correspondant à la distance d'observation commune ;

la mesure de la température de l'objet cible en fonction de la caractéristique particulière sélectionnée dans la première image d'imagerie thermique ;

dans lequel le décalage réglé finement est déterminé dans un processus d'entraînement comprenant :

l'acquisition respectivement d'une seconde image de lumière visible et d'une seconde image d'imagerie thermique par le biais du canal de lumière visible et du canal d'imagerie thermique du dispositif d'image dans une scène dans laquelle un objet d'entraînement est placé à la distance spécifiée devant le dispositif d'image ;

la mise à l'échelle, en fonction du rapport d'échelle spécifié, de la seconde image de lumière visible, pour obtenir une seconde image de lumière visible mise à l'échelle ;

la détermination d'une position de mappage initiale d'un segment d'image de lumière visible dans la seconde image d'imagerie thermique en fonction de la relation de mappage de coordonnées et d'une position du segment d'image de lumière visible dans la seconde image de lumière visible mise à l'échelle, dans lequel le segment d'image de lumière visible représente un segment d'image représentant l'objet d'entraînement dans la seconde image de lumière visible ;

l'ajustement de la position de mappage initiale du segment d'image de lumière visible dans la seconde image d'imagerie thermique à une position de mappage intermédiaire en fonction du décalage préconfiguré correspondant à la distance d'observation commune ;

l'ajustement de la position de mappage intermédiaire, de sorte que le segment d'image de lumière visible mappé dans la seconde image d'imagerie thermique coïncide avec un segment d'image d'imagerie thermique dans le second segment d'image d'imagerie thermique, dans lequel le segment d'image d'imagerie thermique représente un segment d'image représentant l'objet d'entraînement dans la seconde image d'imagerie thermique ; et

la détermination d'une quantité d'ajustement de la position de mappage intermédiaire comme étant le décalage réglé finement correspondant à la distance spécifiée.

7. Dispositif d'imagerie thermique selon la revendication 6, dans lequel le mappage, selon la relation de mappage spécifiée, de la caractéristique particulière associée à l'objet cible dans l'image de lumière visible dans l'image d'imagerie thermique comprend :

la mise à l'échelle de l'image de lumière visible en fonction du rapport d'échelle spécifié pour obtenir une première image de lumière visible mise à l'échelle ; et

la détermination de la position de la caractéristique particulière mappée dans l'image d'imagerie thermique en fonction de la relation de mappage de coordonnées et d'une position de la caractéristique particulière dans l'image de lumière visible mise à l'échelle.

8. Dispositif d'imagerie thermique selon la revendication 6, dans lequel un angle de vision pour le canal de lumière visible est supérieur à un angle de vision pour le canal d'imagerie thermique.

9. Dispositif d'imagerie thermique selon la revendication 6, dans lequel le dispositif est en outre configuré pour afficher les données de température mesurées de l'objet cible dans l'image de lumière visible.

Map a feature of interest associated with a target object in a visible light image into a thermal imaging image according to a specified mapping relationship, to determine a position of the feature of interest mapped into the thermal imaging image, where the visible light image and the thermal imaging image are captured through a visible light channel and a thermal channel of an image device respectively in a scene in which the target object is placed at a specified object distance in front of the image device — S100

Adjust the position of the feature of interest mapped into the thermal imaging image according to an offset, such that at least a part of image segment representing the target object in the thermal imaging image is selected by the feature of interest — S200

Measure temperature of the target object according to the image segment selected by the feature of interest in the thermal imaging image — S300

FIG.1

10

Feature of interest mapping module — 100

Position offset adjustment module — 200

Target object temperature measurement module — 300

FIG.2

Scale the visible light image according to the scaling ratio to obtain a scaled visible light image, such that an image segment representing the target object in the scaled visible light image and an image segment representing the target object in the thermal imaging image have a same size

S101

Determine a position of the feature of interest mapped into the thermal imaging image according to the coordinate mapping relationship and a position of the feature of interest in the scaled visible light image

S102

FIG.3

$\beta$

$\alpha$

X

Y

D

FIG.4

Map a feature of interest associated with a target object in a visible light image into a thermal imaging image according to a specified mapping relationship, to determine a position of the feature of interest mapped into the thermal imaging image, where the visible light image and the thermal imaging image are captured through a visible light channel and a thermal channel of an image device respectively in a scene in which the target object is placed at a specified object distance in front of the image device

S100

Adjust the position of the feature of interest mapped into the thermal imaging image according to an offset, such that at least a part of image segment representing the target object in the thermal imaging image is selected by the feature of interest

S200

Measure temperature of the target object according to the image segment selected by the feature of interest in the thermal imaging image

S300

Display the measured temperature data of the target object in the visible light image

S400

FIG.5

10

Feature of interest
mapping module ⟋ 100

Position offset
adjustment module ⟋ 200

Target object
temperature
measurement module ⟋ 300

Temperature data
display module ⟋ 400

FIG.6

Thermal imaging device

503 First lens group

Second lens
group ⟋ 504

Processor ⟋ 510

Uncooled infrared
focal plane detector 501

Visible light
sensor 502

520 Network interface

530 Internal storage

10 Temperature measurement
processing apparatus

Non-volatile
memory 540

FIG.7

**REFERENCES CITED IN THE DESCRIPTION**

**Patent documents cited in the description**

- CN 107764402 A
- US 2015109454 A1
- US 2016196653 A1
- CN 107976257 A
- EP 1831657 A2